## Europäisches Patentamt
## European Patent Office
## Office européen des brevets

(19)

(11) Numéro de publication: **0 121 638**
**B1**

(12) # FASCICULE DE BREVET EUROPÉEN

(45) Date de publication du fascicule du brevet:
**05.11.86**

(51) Int. Cl.⁴: **B 23 B 13/04**

(21) Numéro de dépôt: **83810142.6**

(22) Date de dépôt: **06.04.83**

(54) **Dispositif guide barre pour tour multibroche.**

(43) Date de publication de la demande:
**17.10.84 Bulletin 84/42**

(45) Mention de la délivrance du brevet:
**05.11.86 Bulletin 86/45**

(84) Etats contractants désignés:
**CH DE FR GB IT LI SE**

(56) Documents cité:
**US-A-2 327 916**
**US-A-2 548 786**

(73) Titulaire: **SAMECA S.A., Route de Diesse, CH- 2516 Lamboing (CH)**

(72) Inventeur: **Geiser, Markus, La Colline 306, CH- 2603 Péry (CH)**
Inventeur: **Vandevoir, Claude, Les Vignolans 5, CH- 2520 La Neuveville (CH)**

(74) Mandataire: **Steiner, Martin, c/o AMMANN INGENIEURS- CONSEILS EN PROPRIETE INTELLECTUELLE SA BERNE Schwarztorstrasse 31, CH- 3001 Bern (CH)**

LIBER, STOCKHOLM 1986

EP 0 121 638 B1

## Description

La présente invention concerne un dispositif guide-barre pour tour multibroche, comprenant une pluralité de tubes de guidage, chacun de ces tubes supportant une barre à usiner, l'arrière de la barre étant supporté par un piston-poussoir commandant l'avance de cette barre dans son tube de guidage et des tubes de prolongement situés à l'arrière du dispositif et accouplés de manière amovible aux tubes de guidage et servant de logement aux pistons-poussoirs lors du chargement d'une nouvelle barre à usiner dans un tube de guidage à ravitailler, les tubes de prolongement normalement couplés aux tubes de guidage pouvant, lors du ravitaillement, être découplés des tubes de guidage et écartés avec le piston-poussoir pour permettre l'apport d'une nouvelle barre à usiner en face de l'entrée dégagée de ce tube de guidage.

Les dispositifs guide barre connus sont constitués par un barillet en tube d'acier, l'avance de la barre étant faite, en général, par une pince d'avance située dans la poupée du tour. En raison des faibles vitesses de rotation, le bruit engendré par les vibrations des barres en rotation est absorbé soit en plaçant des matériaux d'isolation acoustique autour des tubes du barillet, soit en capitonnant le tour de manière que les bruits ne s'échappent pas vers l'extérieur. Ces systèmes d'insonorisation ne donnent toutefois pas satisfaction, étant donné que le bruit n'est qu'une résultante des vibrations et que même si l'on réalisait une isolation acoustique parfaite, on ne suppprimerait pas les vibrations de la barre qui sont transmises le long de celle-ci dans l'aire d'usinage des pièces, ce qui provoque une détérioration des états de surface et des difficultés au niveau des tolérances à respecter ainsi que la détérioration des outils de coupe.

On connaît de la maison Hermann Förch de Stuttgart (RFA) un système dit PLO qui consiste à modifier les dispositifs guide barre existants des tours multibroches équipés de pinces d'avance de manière à utiliser l'huile ou l'émulsion de coupe de la machine pour faire une lubrification entre la barre et son tube de guidage afin de produire un certain film d'huile ou d'émulsion destiné à atténuer quelque peu les vibrations de la barre en rotation. Ce dispositif connu ne donne toutefois pas satisfaction par le fait que l'arrière de la barre n'est pas soutenu ou centré, de sorte que cette barre flotte et vient battre la paroi intérieure de son tube de guidage. Il en résulte du bruit et les vibrations sont transmises le long de la barre dans la zone d'usinage. Le client n'a pas le choix du fluide à utiliser. Il est obligé d'utiliser dans le guide barre le même fluide de refroidissement qui est utilisé dans la zone d'usinage de la barre. Ces deux fonctions sont entièrement incompatibles. Les fluides pour réaliser un palier hydrodynamique dans une telle application n'ayant pas les mêmes caractéristiques telles que viscosité, émulsion, etc. qu'une eau de savon destinée à refroidir les outils de coupe. En outre, les tubes de guidage des dispositifs connus sont généralement en construction mécano-soudée. Le diamètre intérieur des tubes de guidage du barillet est choisi en fonction de la capacité maximum du tour. Il n'est donc pas possible de choisir le diamètre intérieur au gré des besoins. Il est d'autre part connu que pour réaliser une sustentation hydrodynamique, il faut pouvoir adapter le diamètre intérieur des tubes de guidage au diamètre et profils des matières à usiner, et ceci en fonction des vitesses de rotation que l'on désire atteindre. Par le fait que le dispositif connu est prévu pour s'adapter à une construction déjà existante, il est souvent difficile, voire impossible de réaliser une récupération correcte de l'émulsion ou de l'huile sortant à l'avant et à l'arrière des tubes de guidage.

La demande de brevet européen EP-A-108 182, publié le 16.05.84 concerne un dispositif guide barre pour tour multibroche avec un distributeur de fluide pour commander l'avance d'un piston-poussoir destiné à soutenir l'arrière de la barre dans son tube de guidage. Lors du ravitaillement, le piston-poussoir est retiré et reçu entièrement dans un logement du distributeur qui est alors tourné de manière à présenter une ouverture en face du tube vide à ravitailler et une nouvelle barre à usiner est introduite par cette ouverture dans ce tube. Cependant, par le fait que les tubes sont montées sur un barillet indéxé à chaque opération d'usinage et que le distributeur est fixe, il est nécessaire, avant toute rotation du barillet, de faire pénétrer entièrement le piston-poussoir dans le tube de guidage. Un tel dispositif présente les inconvénients suivants: Son encombrement n'est pas minimum en raison de la longueur du piston-poussoir qui doit être engagée dans le tube de guidage, ce qui nécessite un contrôle difficile à réaliser pour s'assurer que la barre est en retrait par rapport à l'arrière de ce tube d'au moins une longueur de piston-poussoir, afin d'éviter tout risque d'endommager le piston-poussoir par cisaillement lors de l'indexage; les tubes de guidage doivent être parfaitement alignés avec le logement du piston-poussoir dans le distributeur et celui-ci doit être orientable.

On connaît aussi du document US-A-2 548 786 un dispositif guide barre pour tour multibroche comprenant des jeux de tubes de guidage supportant chacun une barre à usiner dont l'avance en direction du tour multibroche est produite par un piston-poussoir et un jeu de tubes de prolongement situés à l'arrière des tubes de guidage et en alignement avec ceux-ci. Les tubes de prolongement sont destinés à recevoir les pistons-poussoirs lors du ravitaillement des tubes de guidage en nouvelles barres à usiner. Dans ce but, l'ensemble des tubes de prolongement avec les pistons-poussoirs qu'ils contiennent sont retirés vers l'arrière du dispositif pour libérer le jeu de tubes de guidage à ravitailler et permettre un basculement latéral de ce jeu autour d'un axe horizontal. Cependant, les tubes de guidage et de prolongement sont disposés parallèlement l'un à l'autre dans un même plan, de sorte qu'ils ne forment pas un barillet rotatif indexé à chaque opération d'usinage, le dispositif n'étant pas utilisable avec un tour multibroche dans lequel les broches sont disposées circulairement et l'opération de ravitaillement est relativement compliquée par le fait qu'elle nécessite un déplacement axial de l'ensemble des tubes de prolongemnt et une rotation autour d'un axe horizontal d'un jeu de tubes de guidage.

De manière générale, les tours multibroche modernes évoluent aujourd'hui de manière à tourner plus vite, c'est-à-dire à atteindre les vitesses de rotation des tours monobroche modernes à commande numérique, à supprimer les vibrations et le bruit et à améliorer la précision d'usinage.

En conséquence, le but de la présente invention est de réaliser un dispositif guide barre pour tour multibroche ne présentant pas les inconvénients des dispositifs connus, ce dispositif étant d'encombrement réduit et de conception facilitant l'automatisation du ravitailleent en nouvelles barres à usiner. Pour atteindre ce but, le dispositif selon l'invention est réalisé comme décrit dans la revendication 1. Les revenidications 2 à 7 concernent des modes partvalies de réalisation de cette invention.

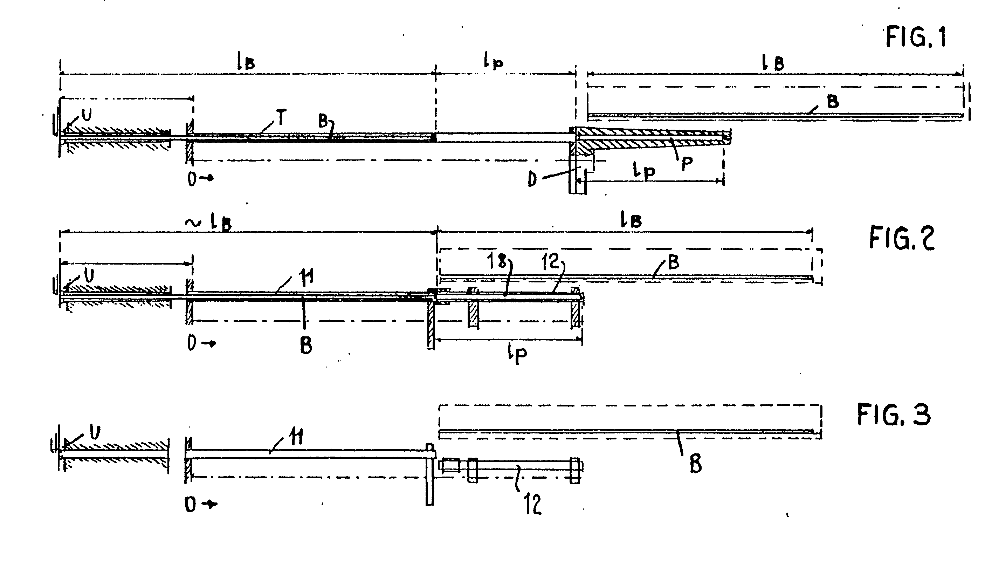

Lors du ravitaillement, le piston-poussoir du tube sans barre est retiré dans le tube de prolongement correspondant et celui-ci est rabattu latéralement de manière à dégager l'entrée du tube de guidage et à permettre un apport latéral d'une nouvelle barre devant l'extrémité arrière du tube à ravitailler. Cette disposition permet d'une part de réduire l'encombrement du dispositif, la longueur de celui-ci étant diminuée (voir figure 1) d'une grandeur P au moins égale à la longueur du piston-poussoir par rapport aux dispositifs connus et d'autre part une automatisation facilitée de l'alimentation en barres, celles-ci étant présentées latéralement et non axialement devant l'entrée du tube à ravitailler. Par le fait que les barres sont soutenues à l'arrière par un piston-poussoir et qu'elles sont supportées hydrodynamiquement au moins dans leur partie médiane à l'intérieur de leur tube respectif, les vibrations sont très fortement diminuées et le bruit provoqué par le dispositif est inférieur au niveau du bruit du tour. Ceci permet l'utilisation du dispositif dans des tours multibroche tournant à des vitesses non encore atteintes jusqu'à présent et une amélioration de la précision d'usinage. Par le fait que le piston-poussoir commande l'avance de la barre dans son tube et dans la poupée du tour, la pince d'avance du tour peut être supprimée, ce qui élimine un dispositif complexe et coûteux de ce tour.

L'invention va être décrite ci-après à titre d'exemple et à l'aide du dessin dans lequel:

La figure 1 est une vue schématique montrant l'encombrement d'un dispositif guide barre connu,

La figure 2 est une vue schématique montrant l'encombrement du dispositif guide barre selon l'invention,

La figure 3 est une vue schématique du dispositif guide barre de la figure 2 avec le tube de prolongement rabattu,

La figure 4A est une vue latérale et partiellement en coupe selon la ligne IV-IV de la figure 7, de la partie avant du dispositif,

La figure 4B est une vue latérale et partiellement en coupe selon la ligne IV-IV de la figure 7, de la partie arrière du dispositif,

La figure 5 est une vue en coupe du dispositif selon la ligne V-V de la figure 4A,

La figure 6 est une vue en coupe du dispositif selon la ligne VI-VI de la figure 4B,

La figure 7 est une vue en coupe selon la ligne VI-VI de la figure 4B du dispositif en position de ravitaillement, et

La figure 8 est une vue en plan de la partie fixe du distributeur.

La figure 1 montre l'encombrement du dispositif de l'état de la technique mentionné plus haut. Lors du ravitaillement, le piston-poussoir P de longueur $l_P$ soutenant normalement l'arrière de la barre B dans son tube de guidage T doit être retiré et introduit dans un logement d'un distributeur D qui n'est pas indexé avec les tubes T du barillet. Une barre B de longueur $l_B$ est introduite axialement à travers une ouverture du distributeur qui se trouve en face du tube vide à ravitailler. Lorsque l'extrémité de droite de la barre B se trouve à une distance $l_P$ du distributeur D, une quittance est donnée et le distributeur est tourné de manière à présenter le piston-poussoir qu'il contient en face du tube qui vient de recevoir une nouvelle barre et ce piston-poussoir doit être introduit dans le tube de manière que la face arrière du piston soit en retrait dans le tube avant toute opération d'indexage du dispositif. A ce moment, l'extrémité de gauche de la nouvelle barre se trouve dans l'unité de serrage U de la poupée du tour multibroche.

La figure 2 montre que le dispositif selon l'invention comprend un tube de prolongement 12 qui, lors du ravitaillement contient le piston-poussoir 18, ce tube étant indexé avec les tubes de guidage 11 en fonctionnement normal du dispositif. Comme indiqué en figure 3, lors du ravitaillement, le tube 12 peut être rabattu avec le piston-poussoir qu'il contient, de sorte que la nouvelle barre peut être présentée latéralement devant l'entrée dégagée du tube de guidage 11 et introduite en entier dans ce tube. A ce moment, l'extrémité de gauche de la barre B peut se trouver dans la poupée du tour multibroche.

Une comparaison des figures 1 et 2 montre que le dispositif selon l'invention est plus court que le dispositif de l'état de la technique d'au moins une longueur de piston-poussoir $l_P$, et ceci par le fait que les tubes de prolonqement 12 étant indexés avec les tubes de guidage 11, il suffit, après le ravitaillement, de placer le tube de prolongement 12 avec le piston-poussoir qu'il contient dans sa position de travail, sans qu'il soit nécessaire d'introduire ce piston-poussoir 18 dans le tube de guidage 11 avant indexage.

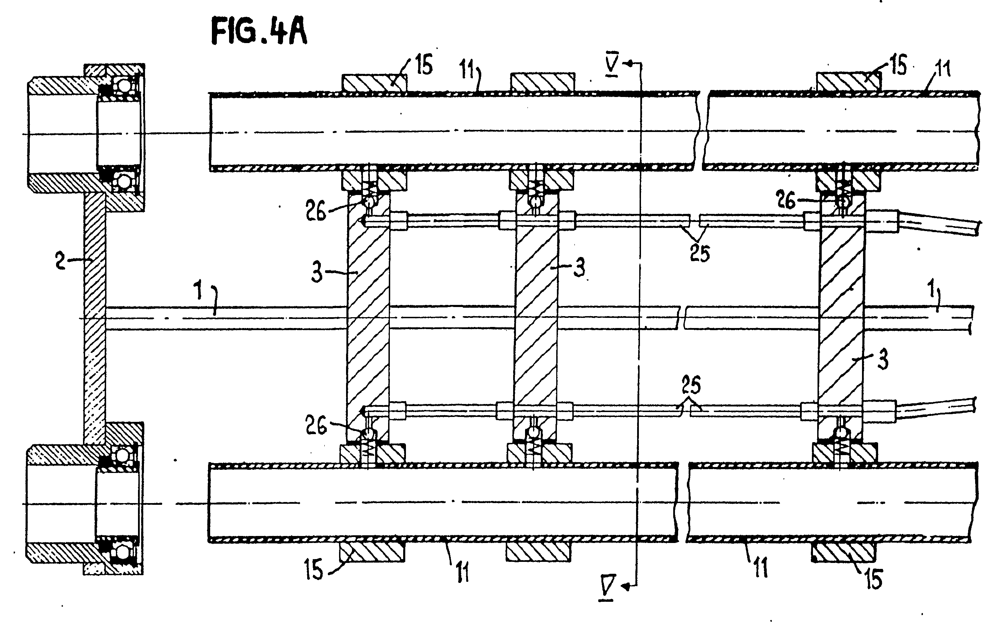

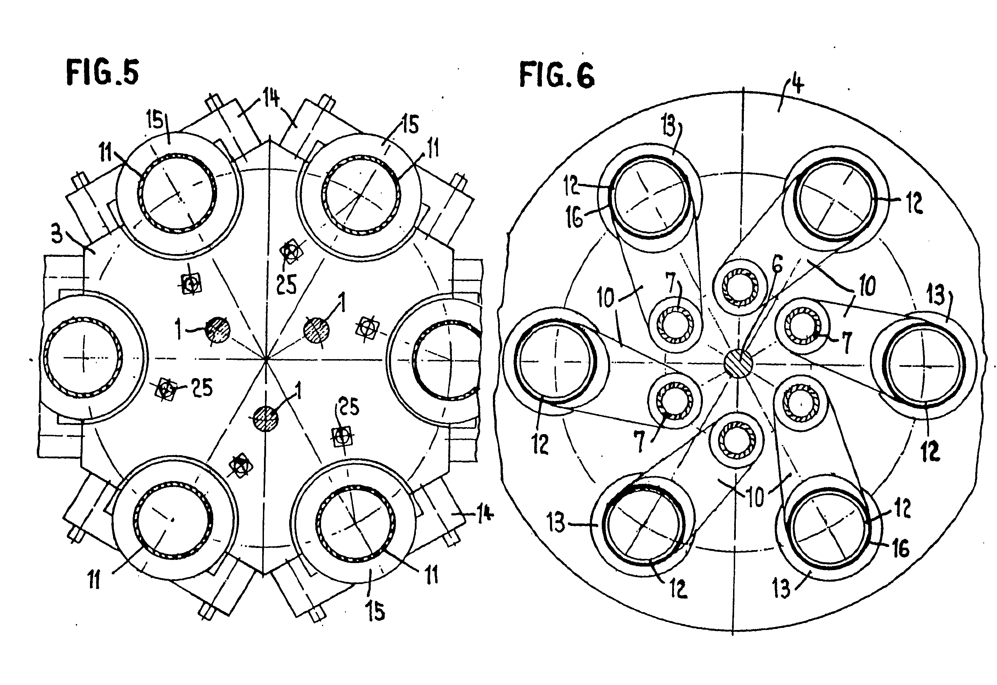

Selon les figures 4A, 4B, 5 et 6, le dispositif comprend un barillet avec trois arbres porteurs 1 d'un disque avant 2 venant se greffer sur l'arrière du tour multibroche, de disques intermédiaires 3 et d'un disque arrière 4. Les disques 3 et 4 ont pour fonction de positionner et de maintenir en place les tubes amovibles de guidage 11 et les tubes amovibles de prolongement 12, ces derniers étant situés à l'arrière, dans le prolongement des tubes de guidage. Les tubes de guidage 11 et de prolongement 12 sont normalement liés entre eux de manière étanche et alignés par des baladeurs 13 porteurs de joints d'étanchéité 24, ces baladeurs étant placés à cheval sur les extrémités se faisant face des tubes 11 et 12. Le disque arrière 4 repose sur un support arrière non représenté qui maintient tout le dispositif en alignement avec le tour multibroche. Les disques 3 servent aussi à la distribution d'huile ou de fluide hydraulique qui est injecté à partir d'un distributeur 17 à travers des conduites 25 et des clapets de non retour 26 entre le tube de guidage 11 stationnaire et la barre en rotation de manière à assurer une sustentation hydrodynamique de cette barre en rotation dans le tube.

Les tubes de guidage 11 sont asemblés avec des bagues 15 maintenues en place sur les disques 3 par des brides de serrage 14. Les tubes de prolongement 12 sont maintenus par des colliers de serrage 16 sur des biellettes 9 et 10 susceptibles de pivoter autour d'arbres tubulaires 7 montés par une de leurs extrémités dans le disque 4 et par l'autre extrémité dans une partie tournante 5 du distributeur 17. Cette partie tournante 5 est entraînée en rotation par le disque 4 par l'intermédiaire des arbres tubulaires 7 et d'une tige de serrage 6. La biellette 10 comporte une ouverture reliée à l'arbre 7 pour l'alimentation en fluide à l'arrière des tubes de prolongement 12. L'alignement, l'entraînement et l'étanchéité entre les tubes de quidage 11 et de prolongement 12 est réalisé par l'intermédiaire de baladeurs 13. Des pistons-poussoirs 18 commandés hydrauliquement par le distributeur 17 se trouvent dans les tubes de guidage 11 ou de prolongement 12. La disposition ci-dessus permet d'interchanger facilement les tubes de guidage 11 et de prolongement 12. Pour enlever le tube de guidage 11, il suffit de déserrer les brides de serrage 14 et de retirer le tube vers l'avant avec les bagues 15 et la douille 27. Les clapets de non retour 26 restent sur les disques 3 et se ferment, empêchant le fluide dans les conduites 25 de s'échapper vers l'extérieur. Pour enlever le tube 12, il suffit de déserrer les colliers de serrage 16 et de retirer le tube. Cette construction garantit une liberté totale dans le choix du diamètre intérieur des tubes 11 et 12, ce qui permet d'adapter facilement le dispositif à tous les diamètres et profils des barres à guider et de garantir dans tous les cas la création de paliers hydrodynamiques.

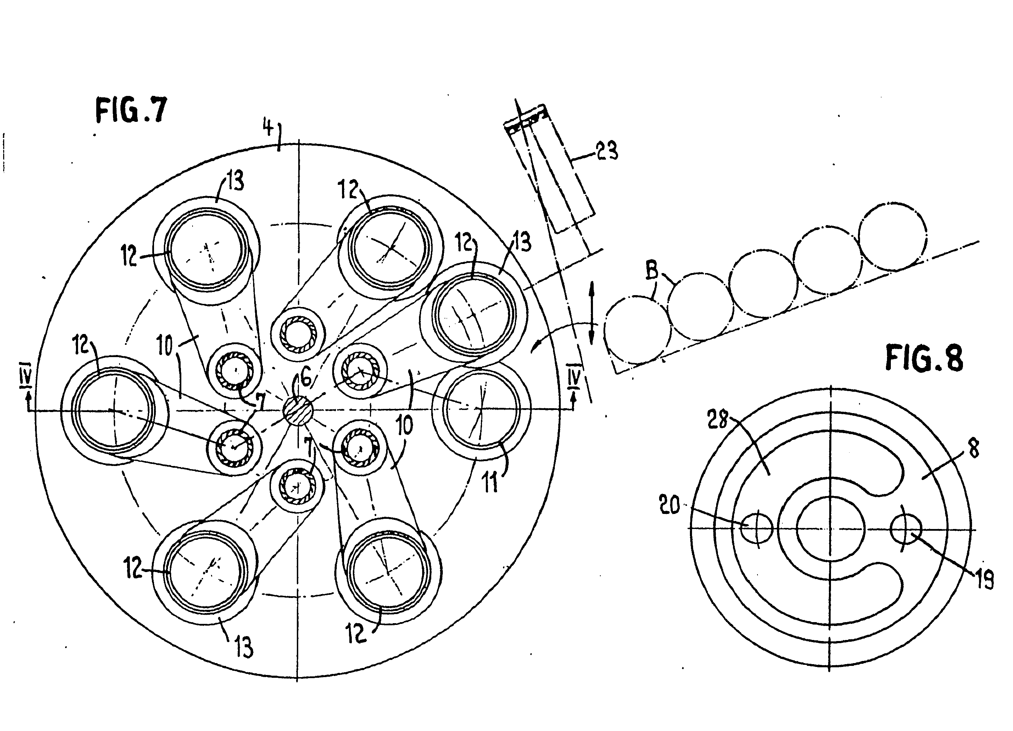

Le distributeur hydraulique 17 se compose d'une partie tournante 5 liée aux arbres tubulaires 7 et à la tige de serrage 6 et d'une partie fixe 8 liée à un groupe hydraulique autonome non représenté, ayant plusieurs sources de pression. Le distributeur a pour fonction de distribuer le fluide qu'il reçoit d'une part entre les tubes de guidage 11 et les barres en rotation par l'intermédiaire des arbres tubulaires 7, des conduites 25 et des clapets de non retour 26 et d'autre part par les arbres tubulaires 7 et les ouvertures des biellettes 10 à 1'arrière des tubes de prolongement 12 pour commander par l'intermédiaire des pistons-poussoirs 18 l'avance des barres à usiner dans les tubes de guidage 11 et dans la poupée du tour multibroche. Dans l'exemple d'exécution décrit, l'alimentation en fluide se fait par deux sources de pression. La première alimente un orifice 19 qui correspond à l'alimentation du tube situé dans la position de ravitaillement. La deuxième source de pression alimente l'orifice 20 qui, par l'intermédiaire de rainures circulaires 28 (figure 8) alimente tous les autres tubes du barillet.

Les éléments essentiels du dispositif étant décrits, examinons maintenant son fonctionnement. Dans le cas d'un cycle de travail normal, une barre est engagée dans chacun des tubes de guidage 11 du barillet, ces tubes étant maintenus en alignement avec les tubes de prolongement 12 par les baladeurs 13 qui garantissent en même temps l'étanchéité entre les tubes 11 et 12. Les orifices d'alimentation 19 et 20 du distributeur 17 sont sous pression de fluide. Tous les pistons-poussoirs 18 s'appuient contre les faces arrières des barres à usiner en raison de la pression de fluide agissant sur l'arrière des pistons-poussoirs 18. Le tour travaille en cycle automatique, c'est-à-dire qu'à chaque opération il y a un indexage du barillet entraîné par le tour multibroche et une avance de la barre provoquée par l'action du piston-poussoir 18 lors de l'ouverture de l'unité de serrage U de la poupée. Ce cycle continue jusqu'au moment où l'une des barres est entièrement usinée. A ce moment, le tour s'arrête (il n'y a plus d'indexage) et un signal est émis pour indiquer un manque de matière. Il est donc nécessaire d'introduire une nouvelle barre à usiner dans le tube de guidage vide. Pour ce faire, l'entrée 19 du distributeur 17 est mise sous vide ce qui a pour effet de retirer par dépression le piston-poussoir 18 du tube sans barre. Les autres tubes restent sous pression par alimentation de l'orifice 20. Le piston-poussoir 18 du tube sans barre s'engage entièrement dans le tube de prolongement 12 correspondant, sa face arrière vient en contact avec une butée 21 et un détecteur non représenté donne une quittance indiquant cette position extrême du piston-poussoir. Au reçu de la quittance, le baladeur 13 est déplacé vers l'arrière sur le tube 12 afin de dégager entièrement le tube 11, ce qui permet de basculer le tube 12 dans la position indiquée en figure 7 avec le baladeur 13, les bielles 9 et 10 et le piston-poussoir 18 qu'il contient autour de l'arbre tubulaire 7 auquel ces bielles sont reliées. L'entrée du tube de quidage 11 dans la position de ravitaillement est alors dégagée et une nouvelle barre à usiner peut être présentée latéralement devant cette entrée et être introduite entièrement dans le tube 11. Le tube 12 est alors remis en alignement avec le tube 11 et les tubes 11 et 12 sont à nouveau verrouillés par avance du baladeur 13 dans sa position de travail, à cheval sur les extrémités des deux tubes 11 et 12.

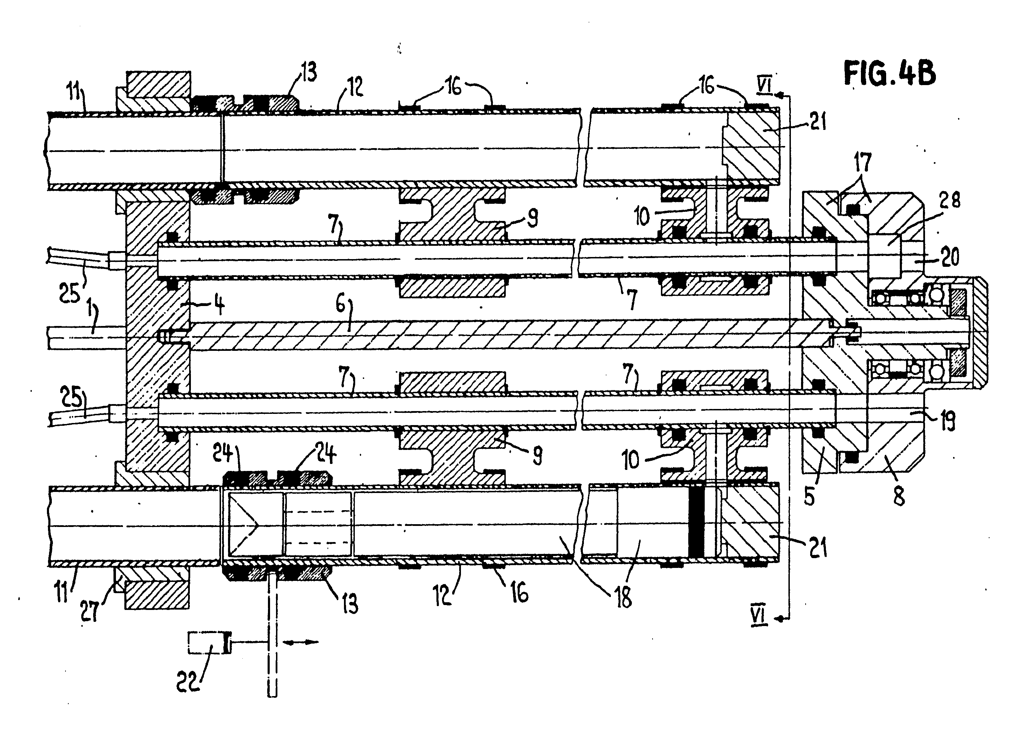

Le dispositif selon l'invention permet un ravitaillement automatique en barres. Dans ce but (figures 4B et 7), le déplacement axial du baladeur 13 est effectué par un cylindre de commande 22 au reçu de la quittance de fin de course du piston-poussoir 18 et le pivotement radial du tube de prolongement 12 autour de l'arbre 7 est effectué par un second cylindre de commande 23. A partir d'un ravitailleur de barre existant sur le marché, il est alors aisé de réaliser un ravitaillement complètement automatique.

Le dispositif selon l'invention permet, en raison de la commande de l'avance de la barre par le piston-poussoir, de supprimer la pince d'avance montée dans la poupée du tour multibroche, ce qui est désirable pour les raisons suivantes: La pince d'avance est un dispositif complexe et très coûteux. En raison du frottement axial (à chaque avance de barre) de la pince précontrainte sur la barre, il se produit une usure de la pince qui doit être réglée ou remplacée et un marquage (griffure longitudinale) de la barre à usiner. Les pinces d'avance sont nominatives au diamètre des barres et doivent être changées chaque fois que l'on change de diamètre de barre, ce qui implique des temps de mise en oeuvre et des frais d'outillage considérables. Les pinces d'avance réduisent la capacité maximum de passage de la poupée à 12 - 16 mm de diamètre et par le fait que ces pinces d'avance sont précontraintes, l'introduction d'une nouvelle barre est problématique car il faut une force d'appui considérable sur l'arrière de la pince pour ouvrir celle-ci.

Les avantages de la suppression de la pince d'avance du tour multibroche sont les suivants: augmentation de la capacité maximum de passage de la poupée, suppression d'un mécanisme très coûteux, réduction considérable des frais d'outillage, réduction des temps de réglage et d'entretien et suppression des griffures longitudinales des barres.

Par rapport au dispositif de l'état de la technique mentionné dans l'introduction, le dispositif selon l'invention offre les avantages suivants.

La barre ne doit être introduite que jusqu'à la face arrière du tube de guidage 11 alors que dans le dispositif de l'état de la technique il faut que la barre soit au moins en retrait de la longueur du piston-poussoir, ce qui implique un contrôle difficile à réaliser que l'arrière du piston-poussoir a bien pénétré et est introduit entièrement dans le tube de guidage. Il n'y a plus de risque de cisaillement entre la partie fixe et la partie tournante du distributeur de fluide étant donné que les tubes 12 porteurs des pistons-poussoirs 18 tournent avec le barillet. Il n'y a plus de problème d'alignement entre les tubes de guidage et la partie fixe du distributeur pour le passage du piston-poussoir. Le distributeur de fluide devient nettement plus petit et plus simple du fait de la suppression du logement pour le piston-poussoir et de la position de ravitaillement. La partie fixe 8 n'a plus besoin d'être orientable.

## Revendications

1. Dispositif guide-barre pour tour multibroche, comprenant une pluralité de tubes de guidage (11), chacun de ces tubes supportant une barre à usiner (B), l'arrière de la barre étant supporté par un piston-poussoir (18) commandant l'avance de cette barre dans son tube de guidage (11) et des tubes de prolongement (12) situés à l'arrière du dispositif et accouplés de manière amovible aux tubes de guidage et servant de logement aux pistons-poussoirs (18) lors du chargement d'une nouvelle barre à usiner (B) dans un tube de guidage (11) à ravitailler, les tubes de prolongement (12) normalement couplés aux tubes de guidage pouvant, lors du ravitaillement, être découplés des tubes de guidage (11) et écartés avec le piston-poussoir (18) pour permettre l'apport d'une nouvelle barre à usiner en face de l'entrée dégagée de ce tube de guidage (1), caractérisé en ce que les tubes de guidage (11) sont assemblés dans un barillet rotatif susceptible d'être indéxé par le tour multibroche à chaque opération d'usinage, en ce qu'un distributeur (17) de fluide hydraulique sous pression est prévu à l'arrière du barillet pour délivrer le fluide entre les tubes de guidage (11) et les barres à usiner (B) pour un support hydrodynamique de ces barres et à l'arrière des pistons-poussoirs (18) pour commander l'avance de ceux-ci dans leur tube respectif, et en ce que les tubes de prolongement sont indexés avec le barillet lors du fonctionnement normal du dispositif et qu'ils peuvent, lors du ravitaillement, être découplés individuellement des tubes de guidage (11) et écartés latéralement par rapport à ces tubes de guidage (11).

2. Dispositif selon la revendication 1, caractérisé en ce que le distributeur (17) comprend une partie fixe (8) reliée par des entrées respectives (19, 20) à des sources de fluide hydraulique sous pression et une partie rotative (5) solidaire du barillet, reliée par des logements (19, 28) aux entrées de la partie fixe, la partie rotative étant reliée à des conduites (7, 25) délivrant le fluide hydraulique sous pression entre les tubes de guidage (11) et les barres à usiner (B) et à l'arrière des pistons-poussoirs (18).

3. Dispositif selon l'une des revendications 1 ou 2, caractérisé en ce qu'une bague baladeuse (13) est prévue à cheval sur les extrémités des tubes de guidage (11) et de prolongement (12) pour assurer l'alignement desdits tubes et l'étanchéité entre ceux-ci, la bague baladeuse (13) pouvant être déplacée axialement sur le tube de prolongement (12) lors du ravitaillement.

4. Dispositif selon l'une des revendications 1 à 3, caractérisé en ce que les tubes de prolongement (12) sont montés par l'intermédiaire de biellettes (9, 10) sur des arbres tubulaires (7) autour desquels ils peuvent pivoter pour s'écarter latéralement et dégager l'extrémité d'un tube de guidage (11) à ravitailler.

5. Dispositif selon la revendication 4, caractérisé en ce que chaque biellette (10) comporte une ouverture reliant l'arbre tubulaire correspondant (7) au tube de prolongement (12) pour assurer l'alimentation en fluide hydraulique entre le distributeur (17) et l'arrière des pistons-poussoirs (18).

6. Dispositif selon les revendications 3 et 4, caractérisé en ce qu'il comprend un premier cylindre (22) commandant le déplacement de la bague baladeuse (13) en réponse à une quittance indiquant que le piston-poussoir (18) est venu en contact avec une butée (21) de fin de course à l'arrière du tube de prolongement (12) et un second cylindre (23) commandant ensuite le basculement du tube de prolongement (12) autour de son arbre tubulaire (7), afin de permettre un ravitaillement automatique en barres (B) à usiner.

7. Dispositif selon l'une des revendications 1 à 6, caractérisé en ce que les tubes de guidage (11) et de prolongement (12) sont amovibles, permettant d'équiper le dispositif de tubes de guidage et de prolongement de différents diamètres, le retrait, respectivement la mise en place d'un tube provoquant la coupure, respectivement la remise en service des connexions hydrauliques.


**Patentansprüche**

1. Stangenführungsvorrichtung für Mehrspindeldrehmaschinen mit einer Mehrzahl von Führungsrohren (11), wobei jedes dieser Rohre eine zu bearbeitende Stange (B) stützt, deren Hinterteil durch einen Kolben (18) unterstützt wird, der das Vorschieben der Stange in ihrem Führungsrohr (11) steuert, und Verlängerungsrohre (12) aufweist, welche am Hinterteil der Vorrichtung angeordnet sind und lösbar mit den Führungsrohren gekuppelt sind, um beim Laden einer neuen zu bearbeitende Stange in ein zu versorgendes Führungsrohr (11) als Raum für die Kolben (18) zu dienen, wobei die Verlängerungsrohre (12), welche normalerweise mit den Führungsrohren gekoppelt sind, bei der Stangenversorgung entkoppelt und mit dem Kolben (18) entfernt werden können, um das Zubringen einer neuen zu bearbeitende Stange vor dem freigelegten Einlass dieses Führungsrohrs zu erlauben, dadurch gekennzeichnet, dass die Führungsrohre (11) in einem rotierenden Walze angeordnet sind, welche durch die Mehrspindeldrehmaschine bei jeder Bearbeitungsoperation fortgeschaltet wird, dass ein Verteiler (17) von hydraulischem Fluid unter Druck am Hinterteil der Walze vorgesehen ist, um das Fluid zwischen die Führungsrohre (11) und die zu bearbeitenden Stangen (B) zuzuführen um eine hydrodynamische Lagerung der Stangen zu schaffen, sowie an der Hinterseite der Kolben (18) zuzuführen um das Vorschieben dieser Kolben in ihren entsprechenden Rohren zu steuern, und dass die Verlängerungsrohre bei normalem Betrieb der Vorrichtung mit der Walze fortgeschaltet werden, wobei die Verlängerungsrohre bei der Stangenversorgung einzeln von den Führungsrohren (11) entkoppelt und bezüglich dieser Führungsrohre (11) seitlich entfernt werden können.

2. Vorrichtung nach Anspruch 1, dadurch gekennzeichnet, dass der Verteiler (17) einen festen Teil (8), welcher durch entsprechende Einlasse (19, 20) mit Quellen von hydraulischem Fluid unter Druck verbunden ist und einen drehbaren, mit der Walze integralen Teil (5) aufweist, welcher durch Kammern (19, 28) mit den Einlassen des festen Teiles verbunden ist, wobei der drehbare Teil mit Leitungen (7, 25) verbunden ist, welche das hydraulische Fluid unter Druck zwischen die Führungsrohre (11) und die zu bearbeitenden Stangen (B) sowie an die Hinterseite der Kolben liefert.

3. Vorrichtung nach einem der Ansprüche 1 oder 2, dadurch gekennzeichnet, dass ein Schiebering (13) rittlings auf den Enden der Führungsrohre (11) und der Verlängerungsrohre (12) vorgesehen ist, um das Fluchten dieser Rohre und die Dichtheit zwischen ihnen zu gewährleisten, wobei der Schiebering (13) bei der Stangenversorgung axial auf das Verlängerungsrohr (12) geschoben werden kann.

4. Vorrichtung nach einem der Ansprüche 1 bis 3, dadurch gekennzeichnet, dass die Verlängerungsrohre (12) durch Kupplungselemente (9,10) auf Hohlachsen (7) montiert sind um welche herum sie drehen können, um sich seitlich zu entfernen und das Ende eines zu versorgenden Führungsrohres freizusetzen.

5. Vorrichtung nach Anspruch 4, dadurch gekennzeichnet, dass jedes Kupplungselement (10) eine Oeffnung aufweist, die die Hohlachse mit dem entsprechenden Verlängerungsrohr verbindet, um die Zufuhr hydraulischen Fluids zwischen dem Verteiler (17) und dem Hinterteil der Kolben (18) zu gewährleisten.

6. Vorrichtung nach Anspruch 3 und 4, dadurch gekennzeichnet, dass sie einen ersten Zylinder (22), welcher das Verschieben des Schieberinges (13) als Antwort auf ein Signal steuert, welches angibt, dass der Kolben mit einem Endanschlag (21) am Hinterteil des Verlängerungsrohr (12) in Kontakt gekommen ist, und einen zweiten Zylinder (23) aufweist, welcher das Kippen des Verlängerungsrohrs (12) um seine Hohlachse (7) steuert, um eine automatische Stangenversorgung zu erlauben.

7. Vorrichtung nach einem der Ansprüche 1 bis 6, dadurch gekennzeichnet, dass die Führungsrohre (11) und die Verlängerungsrohre (12) entfernbar sind, was die Vorrichtung mit Führungs- und Verlängerungsrohre verschiedener Durchmesser auszurüsten erlaubt, wobei das Entfernen, bzw. das Anbringen eines Rohres die Unterbrechung, bzw. die Wiederherstellung der hydraulischen Verbindungen bewirkt.

**Claims**

1. A guide-bar device for a multi-spindle lathe with a barrel comprising a plurality of guiding tubes (11), each of said guiding tubes enclosing a bar stock to be machined (B), the back part of said bar stock being supported by a push-piston (18) controlling the advance of said bar stock in its guiding tube (11) and extension tubes (12) arranged at the back of said device and being removably coupled to said guiding tubes and serving of housing for the push-pistons (18) when a new bar stock to be machined (B) is to be loaded in a guiding tube (11) to be provisioned, said extension tubes (12) which are normally coupled to said guiding tubes being capable to be uncoupled and separated with said push-piston (18) from said guiding tubes for permitting a new bar stock to be machined to be presented opposite the open entry of said guiding tube (11), characterized in that said guiding tubes (11) are assembled in a rotating barrel capable of being indexed by the multi-spindle lathe at each machining operation and in that a distributor (17) of hydraulic fluid under pressure is provided at the back of said barrel for distributing said fluid between the guiding tubes (11) and the bar stock to be machined (B) for a hydrodynamic bearing of said bar stocks and at the back of the push-pistons (18) for controlling the advance of the latter in their respective tubes, and in that the extension tubes are indexed with the barrel during normal working of the device, said extension tubes being capable to be individually uncoupled and separated laterally from said guiding tubes (11) when a new bar stock is to be loaded.

2. A device according to claim 1, characterized in that said distributor (17) comprises a fixed part (8) connected by respective entries (19, 20) to sources of hydraulic fluid under pressure and a rotating part (5) integral with said barrel connected by housings (19, 28) to the entries of said fixed part, said rotating part being connected to pipes (7, 25) distributing said hydraulic fluid under pressure between the guiding tubes (11) and the bar stocks to be machined (B) and to the back of said push-pistons (18).

3. A device acording to the claims 1 or 2, characterized in that a sliding ring (13) sitting astride the ends of the guiding tubes (11) and extension tubes (12) is provided for ensuring alignment and tightness of said tubes, the sliding ring (13) being capable to be axially shifted on the extension tube (12) when a new bar stock is to be loaded.

4. A device according to one of the claims 1 to 3, characterized in that the extension tubes (12) are mounted by means of coupling elements (9,10) on tubular shafts (7) around which they can be rotated for being laterally separated in order to open the end of a guiding tube (11) to be provisioned.

5. A device according to claim 4, characterized in that each coupling element (10) comprises an opening connecting the corresponding tubular shaft (7) to the extension tube (12) for ensuring delivery of hydraulic fluid from the distributor (17) to the back of the push-pistons (18).

6. A device according to claims 3 and 4, characterized in that it comprises a first cylinder (22) controlling the shifting of the sliding ring (13) in response to a signal indicating that the push-piston (18) is in contact with a limit stop (21) at the back of the extension tube (12) and a second cylinder (23) afterwards controlling the rotation of the extension tube (12) around its tubular shaft (7) in order to permit an automatic provisioning with bar stocks to be machined (B).

7. A device according to one of the claims 1 to 6, characterized in that the guiding tubes (11) and extension tubes (12) are removable which permits to provide the device with guiding tubes and extension tubes of different diameters, the withdrawal, resp. the setting in place of a tube causing an interruption, resp. a restoration of the hydraulic connections.

FIG.1

FIG.2

FIG.3

# FIG.4A

0 121 638

FIG.4B

FIG.6

FIG.5

FIG.7

FIG.8

0 121 638